# EUROPEAN PATENT APPLICATION

(11) **EP 3 790 130 A1**
(43) Date of publication of application: **10.03.2021**
(21) Application number: 19195469.2
(22) Date of filing: 04.09.2019
(51) Int. Cl.: H02G 1/14, H02G 15/007, H02G 15/113

(54) **ASSEMBLY METHOD OF A SHIELDED Y-SHAPED SPLICE CONNECTOR**

(71) Applicant: Aptiv Technologies Limited, St. Michael (BB)
(72) Inventor: PODOLAK, Marcin, 33-394 Kl czany (PL); KULIGOWSKI, Michal, 31-603 Kraków (PL)
(74) Representative: Vigand, Philippe

(57) **Abstract**

The disclosure is related to assembly method of a shielded Y-shaped splice connector, the splice connector comprising a housing formed by a lower body (2) arranged to receive one end of three electrical cables (3) and an upper cover (1) arranged to receive three retaining springs (10) for the three electrical cables (3), the method of assembling being characterized in that it comprises:
- a step of placing the upper cover (12) on a first part (6) of a press,
- a step of positioning at least one retaining spring (10) on a second part (5) of the press,
- a step of closing the press by moving the first (6) and second (5) parts of the press closer together so that the at least one retaining spring (10) is inserted into the upper cover (1) at a given insertion force.

## Description

### Technical Field

A Y-splice shielded connector generally comprises housing former with a lower body arranged to receive one end of three electrical cables and an upper cover arranged to receive three retaining springs for all three cables.

### Background Art

When pre-assembling the upper cover, the springs are usually forced manually into the upper cover. Due to the characteristics of the springs a high force is required to compress the springs in order to insert them into the upper cover. This operation is long and must be repeated for each of the three springs. In addition, since the operation is carried out manually, it is difficult to check whether the springs are correctly inserted in the upper cover.

### General Description

The purpose of the disclosure is therefore to propose a method of assembling a connector to ensure optimal positioning and insertion of the springs in the upper cover of the shielded Y-splice connector.

To this end, a first aspect of the disclosure concerns an assembly method of a shielded Y-shaped splice connector, the splice connector comprising a housing formed by a lower body arranged to receive one end of three electrical cables and an upper cover arranged to receive three retaining springs for the three cables, the method of assembling being characterized in that it comprises, a step of placing the upper cover on a first part of a press, a step of positioning a retaining spring on a second part of the press, a step of closing the press by moving the first and second part of the press closer together so that the retaining spring is inserted into the upper cover at a given insertion force. Therefore, the insertion of the springs is done in a reliable manner, with the given insertion force. Thus, the assembly is simpler, more reliable, and avoids manual steps.

According to another feature, the assembly method comprises a step of measuring the closing force of the press so as to indicate whether the insertion strength of retaining spring is reached.

According to another feature, the assembly method comprises a step of positioning the three springs on the second part of the press, the relative position of the three springs on the second part of the press corresponding to the relative position of the three springs in the upper cover of an assembled Y-shaped splice connector

According to another feature, the assembly method comprises a step of detecting the position of a spring in the lower cover when the press is closed.

Another aspect relates to the assembly tooling arranged to the implementation of the assembly method. In particular, the assembly tooling comprises a lower body holder arranged to hold the lower body, and a press comprising an upper cover holder arranged to hold the upper cover and a spring holder arranged to hold at least one spring, wherein the spring holder is arranged to move relatively to the upper cover holder, between an initial position into which an operator can deposit a spring onto the spring holder, and an insertion position into which the spring holder can deposit the spring into the upper cover.

According to an advantageous mode, the spring holder comprises impressions for positioning the springs. Preferably, the impressions are magnetized to hold the springs in place during press closing.

### Brief Description of the Drawings

Other characteristics and advantages of the present disclosure will become clearer when reading the following detailed description of a method of making the disclosure given by way of example, which is not exhaustive and is illustrated by the annexed drawings, in which:
- Fig. 1: represents an exploded perspective view of a shielded Y-splice connector;
- Fig. 2: represents a detailed view of a shielded Y-splice connector.

### Description of Preferred Embodiments

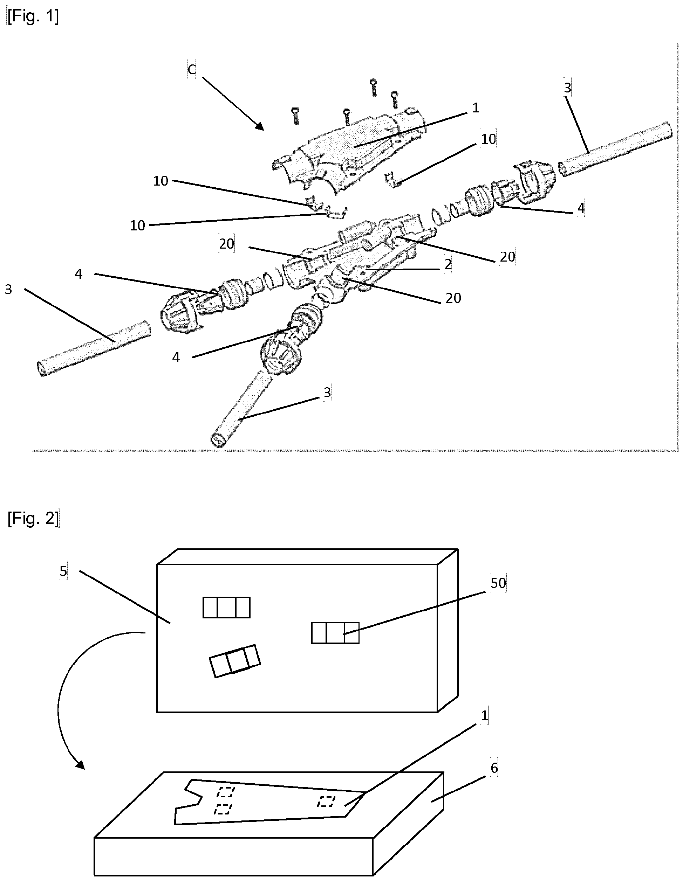

The disclosure will now be described with reference to Figures 1 and 2.

A shielded Y-splice connector includes a housing C comprising a lower body 2 and an upper cover 1 forming a housing for splicing cables 3. Housing C also includes three openings 20 arranged to receive three devices for fixing the cables 3 to housing C.

The upper cover also includes three springs 10 which also fix the cables 3 in the housing C.

The assembly of the Y-splice shielded connector includes mounting the springs 10 in the upper cover 1. The assembly of these springs 10 requires that they be stressed in the housing C.

The periphery of the lower body 2 and the upper cover 1 include a flat surface 11, 21 forming a contact surface when the housing C is assembled. In other words, when the upper cover 1 is assembled on the lower body 2, the flat surface 21 of the lower body 2 is in contact with the flat surface 11 of the upper cover 1. During assembly, an adhesive is applied to the flat surface 11, 21 of either the upper cover 1 or the main body 1 to ensure, on the one hand, the solidarization of the box C and, on the other hand, by sealing at the contact surface between the upper cover 1 and the lower body 2. The assembly of the lower body 2 and the upper cover 1 is completed by screws 15. Screws 15 are for example positioned on surfaces 11, 21 of the upper cover 1 and the main body 1. Thus, when tightening the screws 15 the sealing is reinforced.

In order to ensure optimal assembly, the upper cover 1 and lower body can be equipped with alignment elements 14, 24. These alignment elements 14, 24 allow the upper cover 1 to be correctly positioned on the lower body 2 to avoid any offset during assembly. These alignment elements include, on the one hand, studs 14, for example, projecting from the inner surface of the upper cover 1 and orifices 24 corresponding to the lower body 2. During assembly, the studs 14 must be inserted into the holes 24 so that the flat surfaces 11, 21 of the upper cover 1 and lower body 2 are perfectly adjusted.

Alternatively, the studs may be present on the lower body 2 and the holes on the upper cover 1, and the studs and holes may also be positioned near the screw holes 15.

The openings 20 of the housing C are formed on both the lower body 2 and the upper cover 1, for example, which allows the cables to be inserted during the assembly process. Thus, according to the example shown, each opening 20 is formed by a semi-circular section on the upper cover and on the lower body 1. During assembly, these semi-circular sections form a circular hole forming an opening 20.

The sealing at the opening 20 between the cable and the box C is ensured, for example, by an elastic sleeve 42. The elastic sleeve 42 includes a central passage 43 through which the cable 3 passes. When assembling the connector according to the disclosure, sleeve 42 is slipped onto cable 3. The sleeve 42 is then placed in the circular section of the lower body 2, for example. When connecting the lower body 2 to the upper cover 1, the sleeve 42 is then compressed between the cable 3 on the one hand and the lower body 2 and the upper cover 1 on the other hand, thus ensuring sealing at the opening 20 of the housing C.

The connector also includes a cable anti-tear device. This anti-tear device includes a ring 41 and a cap 40 mounted on each opening 20 of the case. The ring 41 is mounted inside the opening against the elastic sleeve 43. The cap 40 is mounted outside the housing C at the opening 20. The ring 41 and the cap are also pushed onto cable 3 during assembly. When mounting the anti-tear device, the cap 40 pushes against the ring 41, which then compresses the elastic sleeve 43. This also improves the tightness at opening 20.

Depending on the disclosure, the assembly process of the shielded Y-splice connector includes at least the following steps:
- the upper cover 1 is equipped with retaining springs 10,
- a check of the presence and position of the retaining springs is carried out before the application of an adhesive on the flat surface 11 of the upper cover. This verification can be done by a camera. The adhesive can be applied alternately on the flat surface 21 of the lower cover 2.
- the application of the adhesive is then checked, for example by means of a camera, to ensure the presence of the adhesive and the quantity of adhesive deposited on the flat surface 11, 21 of the upper cover 1 or lower body 2;
- Once this check has been carried out, the upper cover 1 is assembled on the lower body. This assembly can be done with screws 15.

The assembly of the upper cover 1 on the lower body 2 can be preceded by the assembly of the cables, the sleeve 43 and the anti-tear device 40, 41 on the lower body 2.

Insofar as the connector according to the disclosure is made in 2 parts, all the steps of the process can be carried out.

It will be understood that various modifications and/or improvements obvious to the skilled person may be made to the different methods of making the disclosure described in this description without going beyond the scope of the claims.

## Claims

1. Assembly method of a shielded Y-shaped splice connector, the splice connector comprising a housing formed by a lower body (2) arranged to receive one end of three electrical cables (3) and an upper cover (1) arranged to receive three retaining springs (10) for the three electrical cables (3), the method of assembling being **characterized in that** it comprises:
- a step of placing the upper cover (12) on a first part (6) of a press,
- a step of positioning at least one retaining spring (10) on a second part (5) of the press,
- a step of closing the press by moving the first (6) and second (5) parts of the press closer together so that the at least one retaining spring (10) is inserted into the upper cover (1) at a given insertion force.

2. Assembly method of a shielded Y-splice connector according to claim 1 **characterized in that** it comprises
- a step of measuring the closing force of the press so as to indicate whether the insertion force of the retaining spring (10) is reached.

3. Assembly method of a shielded Y-splice connector according to one of the previous 1 or 2, **characterized in that** it comprises:
- a step of positioning the three retaining springs (10) on the second part of the press, the relative position of the three springs on the second part of the press corresponding to the relative position of the three springs in the upper cover of an assembled Y-shaped splice connector.

4. Assembly method of a shielded Y-splice connector according to one of the previous 1 to 3, **characterized in that** it comprises:
- a step of detecting the position of each retaining spring (10) in the lower cover (1) when the press is closed.

5. Assembly tooling for the implementation of the assembly method according to any of the preceding claims, comprising a press comprising an upper cover holder (6) arranged to hold the upper cover (1) and a spring holder (5) arranged to hold at least one spring (10), wherein the spring holder is arranged to move relatively to the upper cover holder, between an initial position into which an operator can deposit a spring onto the spring holder, and an insertion position into which the spring holder can deposit the spring into the upper cover.

6. Assembly tooling for the implementation of the assembly method according claim 5, wherein the spring holder (5) comprises impressions (50) for positioning the springs (10).

7. Assembly tooling for the implementation of the assembly method according to claim 6, wherein the impressions (50) are magnetized to hold the springs (10) in place during press closing.
